# EUROPÄISCHE PATENTSCHRIFT

(11) **EP 2 528 709 B1**
(45) Veröffentlichungstag und Bekanntmachung des Hinweises auf die Patenterteilung: **03.08.2016**
(21) Anmeldenummer: 11702947.0
(22) Anmeldetag: 20.01.2011
(51) Int. Cl.: F16P 1/06, B23K 26/70

(54) **ANORDNUNG UND VERFAHREN ZUM DETEKTIEREN EINER STRAHLUNG**
ASSEMBLY AND METHOD FOR DETECTING RADIATION
SYSTÈME ET PROCÉDÉ DE DÉTECTION D'UN RAYONNEMENT

(30) Priorität: 27.01.2010 DE 102010000227
(43) Veröffentlichungstag der Anmeldung: 05.12.2012
(73) Patentinhaber: Reis Group Holding GmbH & Co. KG, 63785 Obernburg (DE); Ingenieurbüro Goebel GmbH, 64289 Darmstadt (DE)
(72) Erfinder: GOEBEL, Klaus R., 64289 Darmstadt (DE); MIESSEN, Matthias, 52249 Eschweiler (DE)
(74) Vertreter: Stoffregen, Hans-Herbert
(86) Internationale Anmeldenummer: PCT/EP2011/050768
(87) Internationale Veröffentlichungsnummer: WO 2011/092110

(56) Entgegenhaltungen:
- EP-A2- 1 746 334
- DE-B3-102006 036 500
- DE-B3-102008 024 068
- DE-U1-202007 006 710
- GB-A- 2 182 746

## Beschreibung

Die Erfindung bezieht sich auf eine Anordnung zum Detektieren einer Strahlung, insbesondere im Bereich von 350 nm bis 1.800 nm, vorzugsweise Laserstrahlung, die auf ein eine Öffnung einer Schutzeinrichtung wie Einhausung eines Schutzwandsystems verschließendes scheibenförmiges zumindest semitransparentes erstes Element trifft. Auch nimmt die Erfindung Bezug auf ein Verfahren zum Detektieren einer insbesondere gefahrbringenden Strahlung wie Laserstrahlung, die mittels einer Strahlenquelle in einem Bereich erzeugt wird, der über ein Schutzwandsystem abgeschirmt ist, wobei eine Öffnung in dem Schutzwandsystem über eine zumindest semitransparente Scheibe verschlossen wird.

Insbesondere bezieht sich die Erfindung auf eine Anordnung zum Detektieren einer Strahlung, insbesondere im IR-Bereich, vorzugsweise Laserstrahlung, die auf ein eine Öffnung einer Schutzeinrichtung wie Einhausung eines Schutzwandsystems verschlie-Bendes scheibenförmiges zumindest semitransparentes einen umlaufenden Rand aufweisendes erstes Element trifft, wobei zumindest ein die Strahlung detektierender Sensor mit seinem Strahlenempfangsbereich auf einen Umfangsrandabschnitt des ersten Elements ausgerichtet ist, das strahlleitend ausgebildet ist und gegebenenfalls entlang einer Außenseite des ersten Elements ein vorzugsweise strahlenabsorbierendes zweites Element verläuft.

Ferner ist Gegenstand der Erfindung ein Verfahren zum Detektieren einer insbesondere gefahrbringenden Strahlung, wie Laserstrahlung, die mittels einer Strahlenquelle in einem Bereich erzeugt wird, der über ein Schutzwandsystem abgeschirmt ist, wobei eine Öffnung in dem Schutzwandsystem über eine zumindest semitransparente Scheibe verschlossen wird, und bei Auftreffen der gefahrbringenden Strahlung diese in Richtung zumindest eines im Umfangsrandbereich angeordneten und die gefahrbringende Strahlung detektierenden Sensors über die Scheibe geleitet wird, über den beim Erfassen der gefahrbringenden Strahlung die Strahlenquelle abgeschaltet wird.

Moderne Hochleistungslaser werden in der industriellen Fertigung zur Materialbearbeitung eingesetzt. Portalanlagen und Robotersysteme erlauben dem Anwender eine maximale flexible Führung der Laserstrahlung zum Werkstück. Kann die Laserenergie in Lichtwellenleitern zum Bearbeitungsort geführt werden, wird die Dynamik dieser Systeme noch wesentlich erhöht. Zur Sicherung von Personen werden passiv wirkende (absorbierende) Schutzwände, meist aus Metall, mit einfachen oder mehrfach hintereinander angeordneten Platten um den Laserbereich aufgebaut, die sogenannten Einhausungen. Innerhalb dieser Schutzwände tritt Laserstrahlung mit extrem hoher Intensität auf.

Durch das Bearbeiten der Werkstücke kommt es zusätzlich zu unkontrollierten Reflexionen. Direkte oder indirekte Laserstrahlung, im schlimmsten Fall der Rohstrahl oder sogar der fokussierte Laserstrahl, trifft auf die Umhausung, die ihrerseits die Aufgabe hat, Personen außerhalb vor der Strahlung zu schützen. Je nach Betriebsart der Laseranlage muss dieser Schutz für einen Zeitraum t gewährleistet sein, z. B. bis der Bediener der Anlage den Fehler bemerkt und diese stillsetzen kann. Durch die hohe Laserleitung und die oft geringen Abstände zur Schutzwand wird dieser mögliche Zeitraum t bis zur Abschaltung immer geringer bzw. die Materialanforderungen an die Einhausung zur Erzielung des Schutzzeitraumes werden immer anspruchsvoller. Ausschließlich passive Schutzwände sind daher nur bedingt zur Absicherung von Personen geeignet.

Die DE-C-100 17 284, DE-A-103 25 906, DE-C-196 29 037 beziehen sich auf passiven Schutz gegenüber Laserstrahlung durch verschiedene Ausführungen der Oberflächenbeschaffenheiten bzw. der Zwischenräume der Wände.

Es werden die unterschiedlichen Wärmeleiteigenschaften oder das Reflexionsvermögen zur Realisierung der passiven Strahlensicherheit genutzt. In der Praxis sind die Oberflächen der Schutzwände jedoch bereits nach kurzer Zeit durch Öl, Schmutz und Staub dermaßen verunreinigt, dass die ursprünglichen Eigenschaften der Schutzvorrichtungen nicht mehr gegeben sind.

Gegenstand der DE-C-36 38 874 ist ein aktives Verfahren, wobei die einem Laser zugewandte Innenwand, ähnlich einer Schmelzsicherung, mit einem elektrisch aktiven Leiter ausgerüstet ist. Eine sichere Funktion ist bei diesem Verfahren nur dann gegeben, wenn die Innenwand in ihrem Absorptionsverhalten exakt auf die Laserwellenlänge abgestimmt ist und zusätzlich eine elektrisch aktive Sicherung enthält. Um dieses System z. B. für Faserlaser mit sehr kleinem Strahldurchmesser verwenden zu können, müsste der elektrische Leiter in sehr engen Mäandern in die Wand eingebettet sein, was einen hohen konstruktiven und kostenintensiven Aufwand bedeutet. Eine entsprechende Anordnung ist der DE-U-89 08 806 zu entnehmen.

Eine aktive Anordnung zur Erkennung optischer Strahlung mittels beliebiger Sensoren ist aus der DE-A-199 40 476 bekannt. Wesentlicher Bestandteil der Funktion ist die Ausführung einer Schutzwand. Die Verwendung von Wärmesensoren an der dem Laser zugewandten Wand erfordert, je nach den Wärmeleiteigenschaften des Wandmaterials, eine nicht unerhebliche Anzahl von Sensoren für eine sichere Abschaltung.

Aus der EP-B-0 321 965 sind eine Anordnung sowie ein Verfahren zum Detektieren einer Laserstrahlung bekannt, die aus einem Arbeitsbereich austritt. Hierzu wird der Arbeitsbereich von einer Wand umgeben, in der ein Detektor angeordnet ist, über den die Illumination gemessen wird, die durch auf die Wand auftreffende Laserstrahlung erzeugt wird. Zur Überprüfung des Sensors ist ein Photoemitter vorgesehen, dessen Strahlung von dem Empfänger zur Überprüfung dessen Funktion empfangen wird.

Ein Sicherheitssystem zur Überprüfung von Laserstrahlen ist der GB-A-2 171 513 zu entnehmen. Dabei wird der Laserstrahl mittels eines Empfängers detektiert. Zur Überprüfung der Funktionstüchtigkeit des Empfängers ist eine Infrarotlichtquelle vorgesehen, deren Strahlung von dem Empfänger erfasst wird.

Auch ist ein Schutzwandsystem einer Laserkabine bekannt, das eine Öffnung aufweist, die von einer aus Polycarbonat (Macrolon®) bestehenden Scheibe verschlossen ist. Bei Auftreffen von Laserstrahlung schmilzt diese. Die Scheibe weist dabei eine solche Dicke auf, dass von Beginn des Schmelzens ab hinreichend Zeit zur Verfügung steht, um die Laserquelle abzuschalten. Es handelt sich folglich um ein passives System. Dabei ist eine diesbezügliche Sicherung ausschließlich für Laser geeignet, die im fernen Infrarot-Bereich Strahlung emittieren, also für z.B. CO₂-Laser.

Der DE-B-10 2008 024 068 ist eine gattungsbildende Laserschutzeinrichtung mit einem Laserschutzfenster zu entnehmen, das von einem im Schnitt U-förmigen Rahmen umgeben ist. An der Fensterstirnseite ist eine Detektoreinheit angeordnet, um Sekundärstrahlung zu erfassen, die durch auf das Schutzfenster auftreffende Laserstrahlung erzeugt wird. Das Laserschutzfenster selbst ist als ein Scheibenverbund mit einer den Laserstrahl absorbierenden Schutzscheibe und einer parallel zur Schutzscheibe angeordneten zweiten Scheibe, die den Laserstrahl weniger als die Schutzscheibe absorbiert und die Sekundärstrahlung zu der Detektoreinheit leitet. Die die Strahlung stärker absorbierende Schutzscheibe ist auf der Seite der die Strahlung leitenden Scheibe angeordnet, die der Laserquelle abgewandt ist.

Die Detektoreinheit hat ausschließlich die Aufgabe, auf die Scheibe auftreffende Strahlung zu erfassen, ohne dass der Zwischenraum zwischen Rahmen und Scheibe überwacht wird. Außerhalb des Laserschutzfensters vorhandene Bereiche der Laserschutzeinrichtung müssen mit gesonderten Sensoren erfasst werden.

Der GB-A-2 182 746 ist ein Schutzfenster gegen Laserstrahlung zu entnehmen. Dabei ist zwischen transparenten Schichten des Fensters ein elektrischer Leiter angeordnet. Bei Auftreffen von Laserstrahlung ändern sich dessen elektrischen Parameter, die detektiert werden.

Ein Wandelement zum Schutz vor Laserstrahlung wird in der DE-B-10 2006 036 500 beschrieben. Das Wandelement besteht aus zwei zueinander beabstandeten plattenförmigen Elementen, zwischen denen sich eine lose Schüttung eines Granulats befindet.

Eine Schutzwand für Laserstrahlen ist nach der DE-U-20 2007 006 710 als Behälter mit einem flüssigen Medium ausgebildet. Bei Absinken des Füllstandes wird eine Laserquelle abgeschaltet.

Aus der EP-A-1 746 334 ist eine Laserschutzwand zur Abschirmung eines Laserbereichs bekannt. Die Schutzwand besteht aus einer Innen- und einer Außenwand, zwischen denen sich ein oder mehrere Sensoren zur Erkennung von Nah-Infrarot-Strahlung befinden.

Der vorliegenden Erfindung liegt die Aufgabe zugrunde, eine Anordnung sowie ein Verfahren der eingangs genannten Art so weiterzubilden, dass eine sichere Überwachung sowohl des die Strahlung leitenden ersten Elements als auch der Schutzeinrichtung möglich ist, ohne dass eine Vielzahl von Sensoren benötigt wird.

Nach einer Weiterbildung der Erfindung soll mit konstruktiv einfachen Maßnahmen ein Anordnen des ersten Elements möglich sein, wobei insbesondere auch ein nachträglicher Einbau in Schiebetüren ermöglicht werden soll.

Zur Lösung der Aufgabe wird anordnungsgemäß im Wesentlichen vorgeschlagen, dass die Schutzeinrichtung zwei zueinander beabstandete Wandungen mit Öffnungen aufweist, die über das erste Element verschlossen sind, dass das erste Element randseitig zwischen den Wandungen insbesondere rahmenlos angeordnet ist, und dass der Sensor mit seinem Empfangsbereich innerhalb einer Durchgangsaussparung des ersten Elements angeordnet ist.

Erfindungsgemäß wird das als aktives Fenster oder Scheibe zu bezeichnende erste Element unmittelbar in die Schutzeinrichtung derart integriert, dass diese den Rand der Scheibe aufnimmt. Ein zusätzlicher Rahmen ist nicht erforderlich. Gleichzeitig ergibt sich hierdurch die Möglichkeit, mit einem Sensor sowohl das - nachstehend vereinfacht Scheibe genannt - erste Element als auch zumindest bereichsweise den angrenzenden Raum zwischen den Wandungen zu überwachen. Somit kann die Anzahl der Sensoren zur Gesamtüberwachung der Schutzreinrichtung reduziert werden.

Es besteht jedoch auch die Möglichkeit, die strahlleitende Scheibe doppelschichtig auszubilden, wobei eine Schicht die auf die Scheibe auftreffende Strahlung leitet und somit insbesondere durch Nanopartikel gebildete Streuzentren enthält, die die Strahlung streut, damit diese zu dem oder den Sensor(en) geleitet wird, und die andere Schicht entsprechende Streuzentren nicht aufweist, so dass nur mit überaus geringer Dämpfung auf die Seitenränder der Schicht auftreffende Strahlung zu dem oder den Sensor(en) geleitet werden kann.

Insbesondere ist vorgesehen, dass das Element zumindest strahlauftreffseitig aus einem strahlenabsorbierenden zweiten Material besteht oder eine Schicht aus diesem Material aufweist. Alternativ besteht die Möglichkeit, dass dem ersten Element strahlauftreffseitig ein aus einem strahlenabsorbierenden oder winkelunabhängig reflektierenden Material bestehendes zweites Element wie Filter bzw. eine Art Spiegel zugeordnet ist, das mit dem ersten Element verbunden oder zu diesem beabstandet angeordnet sein kann.

Dabei sollte das zweite Material bzw. zweite Element Streustrahlung absorbieren oder reflektieren, die in dem abzuschirmenden gefahrbringenden Bereich entsteht, und zwar in einem Umfang, der sicherstellt, dass der Sensor nicht ausgelöst und somit die Strahlenquelle nicht abgeschaltet wird, gleichzeitig aber zumindest ein Teil des sichtbaren Spektrums, der nicht die Wellenlänge der gefahrbringenden Strahlung umfasst, durchlässt.

Bei dem zweiten Material handelt es sich insbesondere um ein solches, mittels dessen die Strahlung gefiltert wird, so dass ein optischer Schutz für Personen bei Beobachten des von der Schutzeinrichtung abgeschirmten Bereichs erfolgt.

Erfindungsgemäß wird die strahlen- bzw. lichtleitende Eigenschaft des ersten Materials genutzt, um in das Element gelangende wie gestreute Strahlung, insbesondere Laserstrahlung, detektieren zu können.

Trifft eine entsprechende gefahrbringende Strahlung auf das zweite bzw. erste Element auf, so folgt eine Beschädigung, d. h. Veränderung des Gefüges des Elements derart, dass eine Streustrahlung entsteht, die mittels des ersten Elements zum Sensor aufgrund der strahl- bzw. lichtleitenden Eigenschaften, also der sich ergebenden Totalreflexion bzw. Streuung an in dem ersten Element vorhandenen Partikeln wie Nanopartikeln geleitet wird. Somit erfolgt ein überaus schnelles Reagieren, so dass außerhalb des Bereichs sich befindende Personen durch schnelles Abschalten der Strahlquelle sicher geschützt werden.

Das absorbierende oder reflektierende zweite Material bzw. zweite Element absorbiert bzw. reflektiert die im gefahrbringenden Bereich entstehende Strahlung. Hierdurch wird ab einer Grenzintensität das strahlenabsorbierende oder reflektierende Material, also z. B. der Filter oder ein die Funktion eines Spiegels ausübendes Element, zerstört. Dies kann durch Schmelzen, Brennen oder Platzen erfolgen. Daraufhin tritt die Strahlung auf das lichtleitende erste Material, das vorzugsweise aus Acrylglas besteht, und wird zu den Kanten hin weitergeleitet. Ein oder mehrere an den Kanten angeordnete Sensoren detektieren sodann die Strahlung wie Laserstrahlung und schalten die Strahlenquelle ab.

In Weiterbildung der Erfindung ist vorgesehen, dass das erste Element außenseitig, also auf seiner in Bezug auf die Strahlenquelle abgewandten Seite strahlenabsorbierend oder reflektierend ausgebildet ist oder mit einem entsprechenden dritten Material versehen ist.

Das dritte Material ist grundsätzlich erforderlich, da das erste Material, wie die Acrylglasscheibe, die Strahlenenergie, wie Laserenergie, nur teilweise in Richtung der Kanten leitet, so dass in Folge dessen die hindurchtretende Strahlung absorbiert oder reflektiert werden muss, um Beobachter zu schützen. Dabei muss eine Absorption in dem dritten Material bzw. Reflexion durch das dritte Material derart erfolgen, dass vor einem möglichen Durchtreten der Strahlung durch das dritte Material zuvor die Strahlenquelle über den Sensor abgeschaltet worden ist.

Das zweite und dritte Material, das einen Strahlenschutzfilter wie Laserschutzfilter bildet, sollte exakt auf die Wellenlänge des verwendeten Strahlen- wie Lasersystems abgestimmt werden.

Ferner ist sicherzustellen, dass das auch als aktives Schutzfenster zu bezeichnende System aus dem ersten Element und dem oder den weiteren Elementen bzw. Schichten, die die Strahlung absorbieren oder reflektieren, lichtdicht in der Schutzeinrichtung eingebaut ist, um zu vermeiden, dass Streustrahlung oder Sonnenlicht unmittelbar auf den Sensor gelangen kann.

Unabhängig hiervon, ob die Öffnung über ein Schichtsystem von scheibenförmigen Elementen oder durch ein einziges Element verschlossen ist, wird ein aktives System zur Verfügung gestellt, um eine gefahrbringende Strahlung wie Laserstrahlung abzuschalten.

Die erfindungsgemäße Lehre kann auch bei bereits bestehenden Schutzsystemen eingesetzt werden. Hierzu ist es nur erforderlich, dass in die Schutzwand eine entsprechende Öffnung eingebracht und diese nach der erfindungsgemäßen Lehre mit einem oder mehreren zuvor beschriebene Eigenschaften aufweisenden Element(en) verschlossen und sodann im Bereich eines Umfangsrandabschnitts ein Detektor angeordnet wird.

In Weiterbildung der Erfindung ist vorgesehen, dass sich die Scheibe mit dem bzw. den ersten, zweiten und dritten Materialien bzw. dem Filter bzw. den Filtern über die gesamte Fläche einer die Schutzeinrichtung begrenzenden Wand erstreckt, also eine solche ersetzt, so dass ein ungehinderter Einblick in den gesamten gefahrbringenden Bereich erfolgen kann, in dem die Strahlenquelle angeordnet ist.

Die unmittelbar in die Schutzeinrichtung, also außerhalb der Scheibe eindringende Strahlung kann auch dann entlang einer Streuzentren enthaltenen Scheibe zu Detektoren geleitet werden, wenn die Scheibe zumindest auf der der Strahlenquelle zugewandten bzw. der Strahlenquelle abgewandten Seite eine weitere Schicht bzw. ein als zweites bzw. drittes Element bezeichnetes Filter aufweist, über das die Strahlung absorbiert ist, und zwar dann, wenn zwischen dem ersten Element, also der Scheibe, und dem zweiten und/oder dritten Element ein Luftspalt oder z. B. ein Kleber mit im Vergleich zu dem ersten Element geringerem Brechungsindex verläuft.

Über diesen kann sodann die in die Schutzreinrichtung eindringende Strahlung zu den Sensoren gelangen. Somit ist sichergestellt, dass eine Abschattung der Strahlung durch die Scheibe auch dann nicht erfolgt, wenn diese die bei der Herstellung durch Nanopartikel erzeugten Streuzentren aufweist.

Ein Verfahren zum Detektieren einer insbesondere gefahrbringenden Strahlung wie Laserstrahlung, die mittels einer Strahlenquelle in einem Bereich erzeugt wird, der über ein Schutzwandsystem abgeschirmt ist, wobei eine Öffnung in dem Schutzwandsystem über eine zumindest semitransparente Scheibe verschlossen wird, und bei Auftreffen der gefahrbringenden Strahlung diese in Richtung eines im Umfangsrandbereich angeordneten und die gefahrbringende Strahlung detektierenden Sensors über die Scheibe geleitet wird, über den beim Erfassen der gefahrbringenden Strahlung die Strahlenquelle abgeschaltet wird zeichnet sich dadurch aus, dass als Schutzwandsystem zwei zueinander beabstandete Wandungen mit Öffnungen verwendet wird, die durch die Scheibe verschlossen wird, dass als Material für die Scheibe oder für ein strahlerzeugungsseitig der Scheibe zugeordnetes Element ein solches verwendet wird, dass bei Auftreffen der gefahrbringenden Strahlung diese streut, und dass mittels des zumindest einen Sensors sowohl durch die Scheibe geleitete Strahlung als auch in das Schutzwandsystem außerhalb der Scheibe eindringende Strahlung erfasst wird.

Um einen optischen Schutz für über das erste Element den abgeschirmten Bereich beobachtende Personen zu ermöglichen, ist des Weiteren vorgesehen, dass dem ersten Element strahlenquellenseitig ein Filter oder Reflektor zugeordnet wird, das Teil des ersten Elements oder ein gesondertes Element sein kann.

Alternativ oder ergänzend kann gleichfalls ein strahlenquellenabgewandter Bereich des ersten Elements als Filter oder Reflektor ausgebildet oder ein solcher diesem zugeordnet werden.

Bevorzugterweise ist zumindest auf strahlenquellenabgewandter Seite des ersten Elements ein Filter vorhanden, um sicherzustellen, dass die das erste Element durchsetzende Strahlung einen Beobachter nicht gefährden kann, wobei die Absorption des dritten Materials bzw. des Filters derart auszulegen ist, dass die Reaktionszeit des Sensors zum Abschalten der Strahlenquelle bei Auftreffen von gefahrbringender Strahlung auf die aktive Scheibe berücksichtigt ist. Alternativ kann das dritte Material auch aus einem winkelunabhängig strahlreflektierenden Material bestehen.

Unabhängig hiervon ist vorgesehen, dass eine Strahlenquelle verwendet wird, die Strahlung im Wellenlängenbereich zwischen 350 nm und 1.800 nm emittiert. Insbesondere liegt der Wellenlängenbereich zwischen 800 nm bis 1.800 nm. Bevorzugterweise wird von der Strahlenquelle Strahlung im Nah-Infrarot-Bereich (NIR) emittiert.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von der Zeichnung zu entnehmenden bevorzugten Ausführungsbeispielen.

Es zeigen:
- Fig. 1: einen Ausschnitt aus einer Einhausung,
- Fig. 2: eine Prinzipdarstellung eines Strahlenschutzfensters,
- Fig. 3: eine weitere Ausführungsform eines Strahlenschutzfensters,
- Fig. 4: eine Prinzipdarstellung der Funktionsweise des Strahlenschutzfensters,
- Fig. 5: eine weitere Prinzipdarstellung des Strahlenschutzfensters zur Erläuterung einer ersten Funktion,
- Fig. 6: das Strahlenschutzfenster zur Verdeutlichung einer zweiten Funktion,
- Fig. 7: einen Ausschnitt einer zwei Wandungen aufweisenden Schutzeinrichtung mit Sensor,
- Fig. 8: eine Wand einer Schutzeinrichtung mit Strahlenschutzfenster mit einer ersten Anordnung von Sensoren,
- Fig. 9: die Wand der Schutzeinrichtung gemäß Fig. 8 mit einer zweiten Anordnung von Sensoren,
- Fig. 10: die Wand der Schutzeinrichtung gemäß Fig. 8 mit einer weiteren Ausführungsform eines Strahlenschutzfensters,
- Fig. 11: eine Schnittdarstellung der Schutzeinrichtung im Ausschnitt mit einem Strahlenschutzfenster,
- Fig. 12: einen Schnitt einer weiteren Ausführungsform der Schutzeinrichtung im Ausschnitt mit einem Strahlenschutzfenster,
- Fig. 13: eine weitere Ausführungsform einer Anordnung eines Strahlenschutzfensters mit Rahmen in Vorderansicht,
- Fig. 14: die Anordnung gemäß Fig. 13 entlang der Linie A-A,
- Fig. 15: die Anordnung gemäß Fig. 13 entlang der Linie B-B,
- Fig. 16: die Anordnung gemäß Fig. 13 entlang der Linie C-C,
- Fig. 17: eine weitere Ausführungsform einer Anordnung eines Strahlenschutzfensters mit Rahmen in Vorderansicht und
- Fig. 18: die Anordnung gemäß Fig. 17 entlang der Linie A-A.

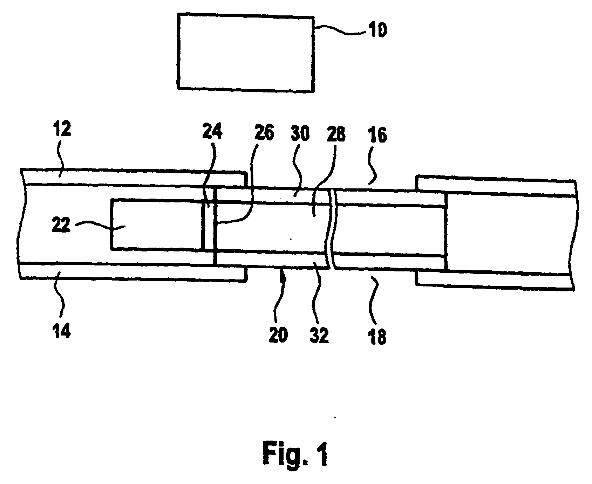

Der Fig. 1 ist ein Ausschnitt einer Einhausung (Schutzeinrichtung) eines Schutzwandsystems zu entnehmen, mit dem ein Bereich abgeschirmt wird, in dem eine Strahlenquelle 10 angeordnet ist, die eine gefahrbringende Strahlung, insbesondere Strahlung im Wellenlängenbereich zwischen 350 nm und 1.800 nm, vorzugsweise Laserstrahlung im Nah-Infrarot-Bereich emittiert, um Gegenstände zu bearbeiten, die sich innerhalb der Einhausung befinden.

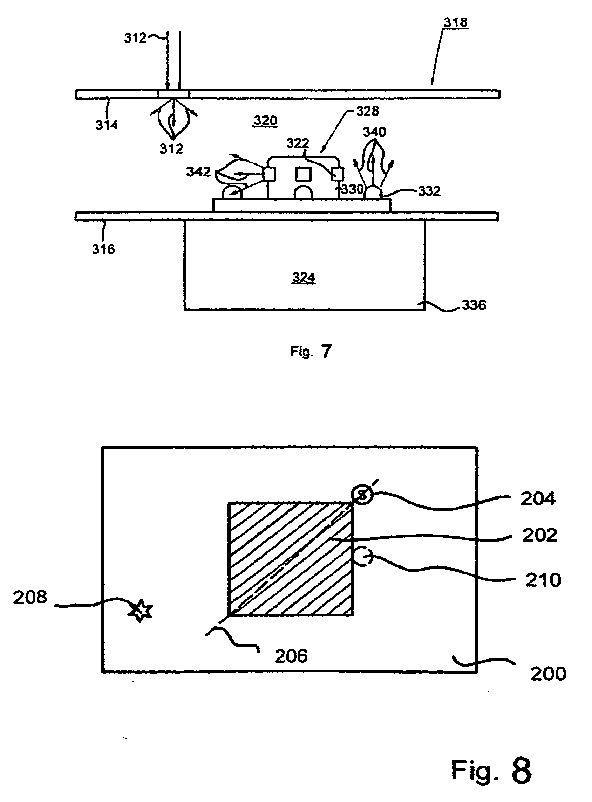

Im Ausführungsbeispiel umfasst das Schutzwandsystem Wandungen 12, 14, die beabstandet zueinander angeordnet sind. Zwischen den Wandungen 12, 14 können Sensoren oder Detektiereinrichtungen zum Detektieren eindringender Strahlung angeordnet sein, um die Strahlenquelle 10 dann abzuschalten, wenn durch auftreffende Strahlung die innere Wandung 12 zerstört wird. Insoweit wird auf Techniken verwiesen, wie diese insbesondere der DE-B-10 2006 026 555 oder der DE-U-20 2007 012 255 zu entnehmen sind. Ein entsprechender Sensor ist prinzipiell der Fig. 7 zu entnehmen.

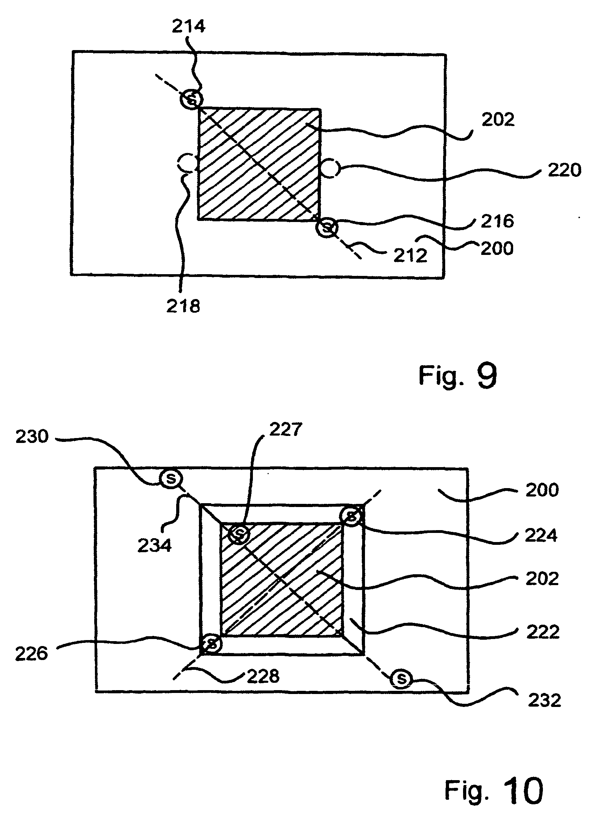

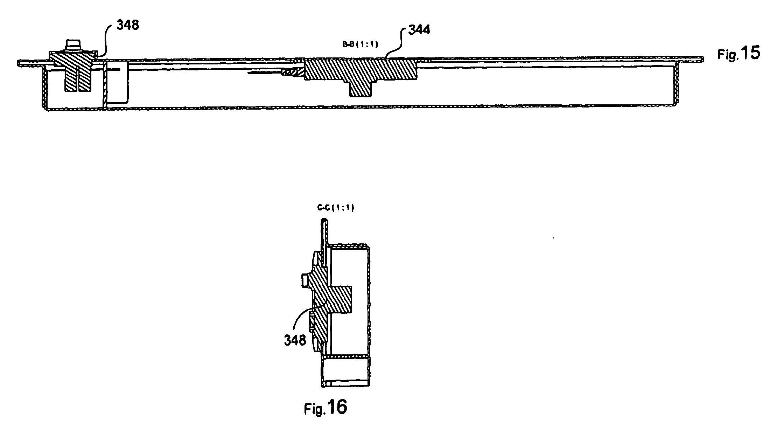

Um den von dem Wandsystem abgeschirmten Bereich visuell überprüfen zu können, ist in den Wandungen 12, 14 jeweils eine Öffnung 16, 18 vorgesehen, die von einem zumindest semitransparenten Scheibensystem 20 verschlossen ist, das erfindungsgemäß als aktives Fenster ausgebildet ist. Dies bedeutet, dass bei Auftreffen von Strahlung automatisch die Laserquelle 10 abgeschaltet wird, um eine Gefährdung von Personen auszuschließen. Nach der Erfindung wird die Strahlung über einen in einer Durchgangsöffnung des Scheibensystems 20 angeordneten Sensor 227, 344 (Fig. 10, 15) erfasst, wobei sich weitere Merkmale der Erfindung aus den Ausführungsbeispielen ergeben.

Im Ausführungsbeispiel umfasst das aktive Fenster das Scheibensystem 20 sowie einen Sensor 22, dessen Empfangsbereich 24 auf einen Umfangsrandabschnitt 26 des Scheibensystems 20 ausgerichtet und im Ausführungsbeispiel mit diesem kontaktiert ist.

Selbstverständlich kann der Sensor 22, d. h. dessen Empfangsbereich 24 auch beabstandet zu dem Scheibensystem 20 angeordnet sein oder mit diesem über einen Strahlenleiter verbunden sein.

Das Scheibensystem 20 besteht im Ausführungsbeispiel aus einer als erstes Element bezeichneten inneren Scheibe 28, die strahlleitend ist. Strahlquellenseitig ist die Scheibe 28 von einem als zweites Element zu bezeichnenden Element 130 abgedeckt, das die emittierte Strahlung zumindest teilweise absorbiert oder reflektiert, das als Filter 30 bzw. Reflektor ausgebildet ist. Nachstehend wird das zweite Element 130 vereinfacht als Filter 30 bezeichnet, unabhängig davon, ob es Strahlen absorbiert oder strahlenreflektierend ist. Gleiches gilt für ein drittes Element 32, das die Scheibe 28 zum Augenschutz außenseitig abdeckt.

Trifft die Strahlung wie Laserstrahlung auf das Scheibensystem 20, so wird der innere Filter 30 zumindest teilweise zerstört mit der Folge, dass eine Streustrahlung auftritt, die in die Scheibe 20 gelangt und in dieser durch Streuung und/oder Totalreflexion zum Sensor 22 geleitet wird, so dass diese erfassbar ist mit der Folge, dass über eine mit dem Sensor 22 verbundene Schaltung die Strahlenquelle 10 abgeschaltet wird. Somit kann das Scheibensystem 20 von der Strahlung nicht in einem Umfang zerstört werden, dass außerhalb des Wandsystems befindliche Personen gefährdet werden.

Die Streuung der Strahlung in der Scheibe 20 wird insbesondere durch in dieser vorhandene Nanopartikel oder durch sonstige Streuzentren im Scheibenmaterial verursacht.

Im Ausführungsbeispiel besteht das Scheibensystem 20 erwähntermaßen aus drei Scheiben, d. h. dem inneren lichtleitenden ersten Scheibenelement 28 und den äußeren Filtern 30, 32 oder Filterscheiben, so dass sich eine Sandwichstruktur ergibt. Die Erfindung wird jedoch auch dann nicht verlassen, wenn nur eines der Filter 30 oder 32 oder keines der Filter 30, 32 vorhanden ist.

In diesem Fall sollte die Scheibe 28 zumindest außenseitig, vorzugsweise sowohl außen- als auch innenseitig eine strahlenabsorbierende oder strahlenreflektierende Schicht aufweisen, um die Funktion der Filter 30, 32 zu erfüllen.

Unabhängig hiervon ist das Material der Filter 30, 32 bzw. der Schichten an die Wellenlängen der emittierten Strahlung anzupassen, damit diese absorbiert bzw. reflektiert und somit bei unmittelbarem Auftreffen der Strahlung auf die strahlenquellenseitige Schicht bzw. das Filter 30 diese bzw. dieses zerstört wird. Dies kann durch Schmelzen, Brennen oder Platzen erfolgen. Hierdurch trifft auf die lichtleitende mittlere Scheibe 28 die Strahlung und wird zu den Kanten hin weitergeleitet, um den Sensor 22 zu beaufschlagen.

Die äußere Schicht bzw. das äußere Filter 32 muss sodann so lange schützen, bis die Strahlenquelle abgeschaltet ist. Dies gilt selbstverständlich auch für die äußere Wandung 14.

Wesentlich für die Verwirklichung der Erfindung ist, dass ein zumindest semitransparentes Element verwendet wird, das in eine Öffnung einer Schutzwandung angeordnet ist und das auftreffende Strahlung derart innerhalb des Elementes durch Streuung und/oder Totalreflexion weiterleitet, dass die Strahlung auf einen Sensor trifft, der im Umfangsrandbereich des semitransparenten Elements mit seinem Empfangsbereich angeordnet ist und der bei Erfassen der Strahlung die Strahlenquelle abschaltet.

Die Erfindung ist nicht auf ein zuvor beschriebenes Wandsystem beschränkt. Vielmehr ist die erfindungsgemäße Lehre zum Verschließen beliebiger Öffnungen in Abschirmwandungen geeignet, wobei sichergestellt werden soll, dass unmittelbar auf die Scheibe auftreffende Strahlung nicht zu einer Gefährdung von Personen führt, vielmehr unverzüglich die Strahlenquelle aufgrund der Leitung der Strahlung innerhalb der Scheibe zu einem Sensor abgeschaltet werden kann.

Die flächige Erstreckung des aktiven Fensters kann die einer einen Schutzbereich verschließenden Wandung aufweisen, wobei das aktive Fenster von einem Rahmen aufgenommen ist.

In diesem Zusammenhang ist anzumerken, dass das aktive Fenster lichtdicht von einer Schutzwandung bzw. einem Rahmen aufzunehmen ist, um zu verhindern, dass Streulicht unmittelbar auf den Sensor gelangt.

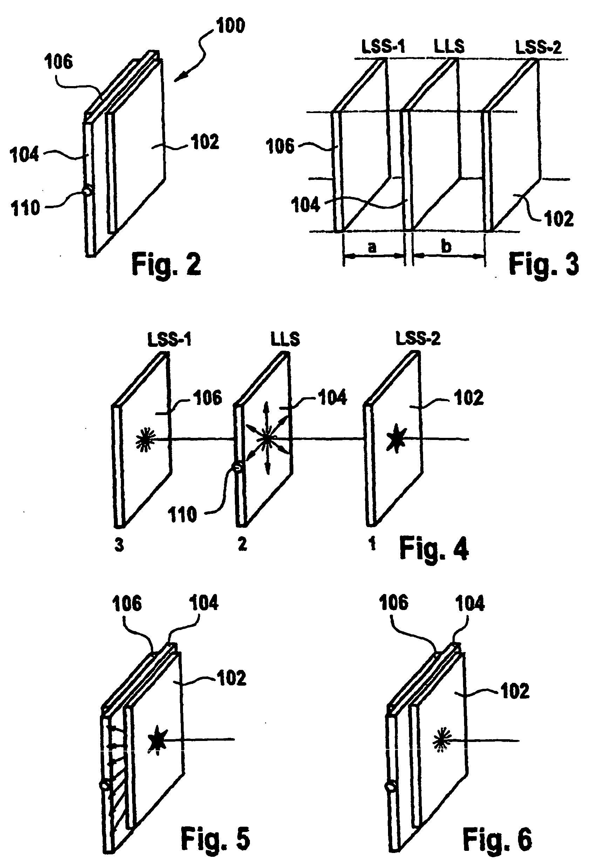

Die erfindungsgemäße Lehre soll nachstehend anhand der Fig. 2 bis 6 noch einmal erläutert werden, und zwar am Beispiel eines Laserschutzfensters.

In Fig. 2 ist ein aktives Laserschutzfenster 100 dargestellt, das aus drei Scheiben 102, 104, 106 besteht. Die äußeren Scheiben 102, 106 sind Laserschutzscheiben LSS-1, LSS-2, wohingegen die mittlere Scheibe 104 eine sogenannte Lichtleitscheibe LLS ist.

Die äußeren Scheiben 102, 106 sind Laserschutzfilter, die nach der gültigen Norm (EN 207) als solche zugelassen sind. Große Laserschutzfilter werden auch als Laserschutzscheiben bzw. Laserschutzfenster bezeichnet.

Gemäß der oben genannten Norm sind diese Filter nur für eine bestimmte Maximalbelastung (Schutzstufe) und Zeit (t = 10 s) zugelassen. Eine direkte Bestrahlung mit einem fokussierten Hochleistungslaser halten solche Filter nur Sekundenbruchteile aus. Ist die auftreffende Strahlung aufgeweitet und/oder gestreut, verlängert sich diese Standzeit. Demzufolge können entsprechende Filter als Beobachtungsfester nur bei geringen Laserleistungen eingesetzt werden.

Die lichtleitende Scheibe 104 besteht aus Kunststoff und vorzugsweise aus Acrylglas. Der entsprechende Kunststoff hat dabei die Eigenschaft, dass Licht, welches z. B. an den Kanten eingekoppelt wird, gleichmäßig auf die Fläche verteilt wird. Der Effekt beruht auf lichtstreuenden Nanopartikeln, die in den Kunststoff bereits in der Schmelze eingebracht werden.

Die Eigenschaften entsprechender Kunststoffe werden erfindungsgemäß genutzt, und zwar in Umkehrung dieses Effekts, d. h. Strahlung, die auf die ebene Fläche trifft, wird von den Partikeln gestreut und an die Kanten weitergeleitet.

Im Ausführungsbeispiel sind die Laserschutzscheibe 102 einer Laserquelle und die Laserschutzscheibe 106 einem Beobachter zugewandt. Zumindest einer Kante der mittleren Scheibe 104 ist ein Sensor 110 zugeordnet, wie dies zuvor erläutert worden ist. Bei dem Sensor 110 kann es sich um einen solchen handeln, wie dieser der DE-B-10 2006 026 555 oder der DE-U-20 2007 012 255 zu entnehmen ist.

Durch die Fig. 3 soll prinzipiell angedeutet werden, dass abweichend von der Darstellung in Fig. 2 die Scheiben 102, 104, 106 auch zueinander beabstandet sein können, d. h., dass die Scheiben 102 und 106 zu der die Lichtleitung ermöglichenden inneren Scheibe 104 beabstandet sind oder nur die strahlenzugewandte Scheibe 106 oder nur die strahlquellenabgewandte Scheibe 102 beabstandet zu der inneren Scheibe 104 verläuft.

Trifft Laserstrahlung auf die innere Laserschutzscheibe 102, welche die Laserstrahlung absorbiert und somit auf deren Wellenlänge ausgelegt ist, wird die Laserschutzscheibe 102 zerstört, d. h. schmilzt, brennt oder platzt. Somit trifft die Laserstrahlung auf die lichtleitende Kunststoffscheibe 102 und wird zur Kante hin geleitet, so dass der Sensor 110 die Laserstrahlung detektieren kann und die Laserstrahlenquelle ausschaltet.

Wie sich aus den Fig. 2 und 4 - 6 ergibt, ist der entsprechende Sensor 110 vorzugsweise im Mittenbereich einer Längskante der Lichtleitscheibe 104 angeordnet, wobei ein unmittelbarer Kontakt oder eine Beabstandung zu der Längskante gegeben sein kann.

Da der lichtleitende Kunststoff nur einen Teil der Laserstrahlung zur Seite reflektiert, wird die durch die Scheibe 104 durchdringende Strahlung von der äußeren Lichtschutzscheibe 106 absorbiert oder alternativ reflektiert, so dass ein Beobachter auf der Außenseite so lange geschützt ist, bis der Laser sicher abgeschaltet ist.

Die Laserschutzscheiben 102, 106 sollten exakt auf die Wellenlänge des verwendeten Lasersystems abgestimmt sein.

Der Überwachungs-Sensor 110 muss der Kategorie III oder IV entsprechen, also den Sicherheitsanforderungen für Detektoren zum Schutz von Leib und Leben.

Ferner muss das aktive Laserschutzfenster 100 in einer Laserschutzwand bzw. Laserschutzvorrichtung bzw. einem Rahmen lichtdicht eingebaut werden, um Streustrahlung, z. B. Sonnenlicht, von dem Sensor 110 fernzuhalten, da dieser ansonsten ausgelöst werden würde.

Des Weiteren soll anhand der Fig. 5 und 6 verdeutlicht werden, dass die innenliegende Laserschutzscheibe 102 geeignet ist, Laserstrahlung zu absorbieren, ohne dass ein Zerstören erfolgt. Gemäß Fig. 5 fällt auf die Laserschutzscheibe 102 direkte Laserstrahlung mit der Folge, dass dieses zerstört wird. Dies wird durch das entsprechende Symbol verdeutlicht. Trifft demgegenüber auf die innere Laserschutzscheibe 102 allein Streulicht auf, so wird dieses von der Laserschutzscheibe 102 absorbiert (siehe Symbol), ohne dass ein Zerstören erfolgt. Somit ist sichergestellt, dass dem Sensor 110 keine Strahlung zugeführt wird, und somit der Laser nicht abgeschaltet wird. Gleiches gilt für eine reflektierende Ausführung der Laserschutzscheibe 102. Diese wird erst ab einer Grenzintensität zerstört, bis zu der die Strahlung reflektiert wird.

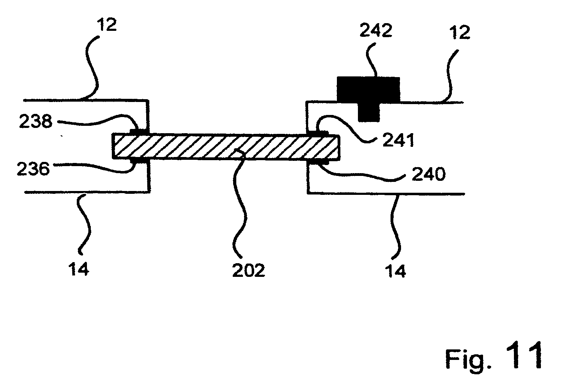

Erfindungsgemäß ist vorgesehen, dass der bzw. die zum Einsatz gelanaende(n) Sensor(en) 22, 110 nicht nur das aktive Fenster, also die Laserschutzscheibe 20, 100 überwacht bzw. überwachen, sondern auch den Raum zwischen den Wandungen 14, 16 des Schutzwandsystems 18 bzw. der Schutzeinrichtung. Dies ist dann möglich, wenn entsprechend der Darstellung gemäß Fig. 1 oder der Ausführungsform der Fig. 11 die Schutzscheibe 20, 100 rahmenlos zwischen den Wandungen 12, 14 positioniert und fixiert wird, so dass infolge dessen die Sensoren 22, 110 nicht nur aus der Laserschutzscheibe 20, 100 austretende Strahlung, sondern auch diejenige erfassen können, die in den Zwischenraum zwischen den Wandungen 12, 14 eindringt, also nach Durchschlagen der inneren Wandung 12. Anordnungen von Sensoren, um eine entsprechende Überwachung zu ermöglichen, sind beispielhaft den Fig. 8 und 9 zu entnehmen.

In Fig. 8 ist rein prinzipiell eine Wand 200 einer Schutzeinrichtung dargestellt, die zwei zueinander beabstandete Wandungen aufweist, wie diese prinzipiell in der Fig. 1 dargestellt sind.

Die Wand 200 weist in den entsprechenden Wandungen vorhandene Öffnungen auf, die über ein aktives Fenster 202 verschlossen sind. Das Fenster 202 ist rahmenlos zwischen den Wandungen angeordnet, so dass ein oder mehrere Sensor(en) sowohl die entlang des aktiven Fensters 202 geleitete Strahlung als auch die in den zwischen den Wandungen der Wand 200 eindringende Strahlung außerhalb des Fensters 202 erfassen kann bzw. können.

Die Fig. 8 soll verdeutlichen, dass ein Sensor 204, der entlang einer Verlängerung einer Diagonalen 206 des eine Rechteckform aufweisenden Fensters 202 angeordnet ist, sowohl das Fenster 202 als auch den Innenraum zwischen den Wandungen überwachen kann; denn das Fenster 202 stellt keine Abschattung dar, da dieses lichtleitend ist. Folglich kann von dem Sensor 204 auch Strahlung erfasst werden, die in den Zwischenraum zwischen den Wandungen in einen Bereich 208 eindringt, die aus der in Bezug auf den Sensor 204 abgewandten Seite des Fensters 202 eindringt.

Eine andere bevorzugte Anordnung eines Sensors ist in Fig. 8 durch die gestrichelte Darstellung angedeutet. So kann ein Sensor 210 insbesondere auch entlang einer Längskante des Fensters 202 angeordnet sein.

Um eine gegebenenfalls redundante oder noch sicherere Überwachung sowohl des Zwischenraums zwischen den Wandungen der Wand 200 der Schutzeinrichtung bzw. Einhausung als auch des aktiven Fensters zu ermöglichen, insbesondere auch in Bezug auf die Dämpfung der Lichtleitung durch das Fenster 202, ist nach Fig. 9 vorgesehen, dass entlang der Verlängerung einer Diagonalen 212 des Schutzfensters 202 in Bezug auf dieses diametral gegenüberliegende Sensoren 214, 216 angeordnet sind. Alternativ oder ergänzend können auch Sensoren 218, 220 an gegenüberliegenden Längskanten des Schutzfensters 202 angeordnet sein.

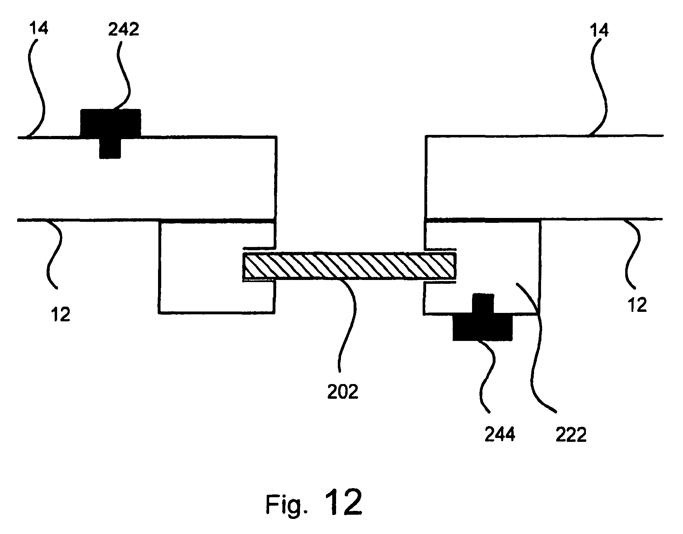

Ist insbesondere vorgesehen, dass das aktive Fenster 20, 100, 102 rahmenlos zwischen den Wandungen 12, 14 des Schutzwandsystems angeordnet werden, so wird von der erfindungsgemäßen Lehre auch die Alternative erfasst, bei der das Schutzfenster 202 von einem Rahmen 222 umgeben ist, der in die Wand 200 eingesetzt oder auf eine Außenseite einer der Außenwände angeordnet wird, wie dies der Fig. 12 zu entnehmen ist. Dabei kann der Rahmen 222, d. h. dessen Schenkel im Schnitt eine U-Form aufweisen.

Unabhängig von der Anordnung ist vorgesehen, dass über erste Sensoren 224, 226, die auf einer Verlängerung einer Diagonalen 228 des Schutzfensters 202 diametral zueinander angeordnet sind, sowohl Schutzfenster 202 als auch Zwischenraum zwischen dem Rahmen 222 und dem Fenster 202 überwacht werden. Gegebenenfalls kann auch nur ein Sensor eingesetzt werden, wenn das Fenster nicht abschattet.

Alternativ kann ein Sensor 227 in einer Durchgangsöffnung des Fensters 202 angeordnet sein, so dass sowohl das Fenster 202 als auch der Raum zwischen dem Fenster 202 und dem Rahmen 222 überwacht werden kann.

Der Zwischenraum zwischen den Wandungen 12, 14 außerhalb des Rahmens 202 wird sodann über zumindest zwei zweite Sensoren 230, 232 überwacht, die entlang einer Verlängerung einer Diagonalen 234 des Rahmens 222 angeordnet werden, so dass diese etwaige in den Zwischenraum zwischen den Wandungen 12, 14 der Wand 200 eindringende Strahlung nicht abschatten kann.

Anhand der Fig. 11 soll rein prinzipiell verdeutlicht werden, dass das Schutzfenster 202 rahmenlos zwischen den Wandungen 12, 14 angeordnet werden kann, also der Rand des Fensters 202 zwischen den Wandungen 12, 14 verläuft, ohne dass ein Rahmen erforderlich ist. Zum Fixieren weisen die Wandungen 12, 14 Abkantungen 236, 238, 240, 241 auf, zwischen denen die Scheibe 202 fixiert wird, und zwar vorzugsweise klemmend. Hierzu können zwischen den Abkantungen 236, 238, 240, 241 und der Scheibe 202 zusätzlich Dichtmittel verlaufen. Ferner können von den Abkantungen 236, 238, 240, 241 oder sonstigen Bereichen der Wandungen 12, 14 abgewinkelte Stege ausgehen, die sich abschnittsweise entlang von Kanten der Scheibe 202 erstrecken.

Des Weiteren ist in Fig. 11 rein prinzipiell ein Sensor 242 dargestellt, mit dem sowohl die Scheibe 202 als auch der Zwischenraum zwischen den Wandungen 12, 14 überwacht wird.

Sofern die Schutzscheibe 202 von dem Rahmen 222 aufgenommen ist, kann der Bereich zwischen der Scheibe 202 und dem Rahmen 222 über ein oder mehrere den Zwischenraum zwischen den Wandungen 12, 14 überwachende Sensor(en) abgesichert werden, und zwar dann, wenn der Rahmen 222 derart auf der Innen- oder Außenwandung 12, 14 angeordnet ist, dass dieser in Bereichen verläuft, in denen der Zwischenraum zwischen den Wandungen 12, 14 überwacht wird, wie dies rein prinzipiell der Fig. 12 zu entnehmen ist. Dabei spielt es keine Rolle, ob der Rahmen 222 auf der Innenwandung 12 oder der Außenwandung 14 angeordnet ist. Durchdringt z. B. die Strahlung die Innenwandung 12 im Bereich des Rahmens 222, so wird erstere von dem Sensor 242 detektiert. Befände sich der Rahmen 222 auf der Außenfläche der Innenwandung 14, so könnte auch dann, wenn der Rahmen 222 nicht gesondert überwacht wird, die Strahlung in den Zwischenraum zwischen den Wandungen 12, 14 eindringen mit der Folge, dass entsprechend eine Detektion erfolgen kann.

Unabhängig hiervon muss ein Empfangsteil eines Sensors 244 innerhalb des Rahmens 222 vorhanden sein, um die Scheibe 202 zu überwachen.

Um die Anzahl der Sensoren zu minimieren, kann eine der Fig. 12 entsprechende Anordnung in Bezug auf die Sensoren derart gewählt werden, dass z. B. ein die Scheibe 212 überwachender Sensor entlang einer Längskante oder entlang einer Diagonalen der Scheibe 202 angeordnet ist und den Zwischenraum des Wandsystems überwachende Sensoren diametral zueinander entlang einer Diagonalen des Rahmens 222 angeordnet sind, wie dies prinzipiell der Fig. 10 zu entnehmen ist.

Auch besteht die Möglichkeit, den Rahmen 222 zwischen den Wandungen 12, 14 anzuordnen. Fenster 202 und Rahmen 222 einerseits und der Zwischenraum zwischen den Wandungen andererseits müssten getrennt überwacht werden.

Beispielhaft ist der Fig. 7 ein Sensor zu entnehmen, der bei der erfindungsgemäßen Lehre zum Einsatz gelangen kann und der in der DE-U-20 2007 012 255 ausführlich beschrieben worden ist.

Der Fig. 7 ist ein Ausschnitt eines zwei zueinander beabstandete Wandungen 314, 316 aufweisenden Wandsystems 318 einer Schutzeinrichtung bzw. Einhausung zu entnehmen, wie dies zuvor erläutert worden ist. Zum Detektieren eines Eindringens einer kontinuierlichen oder gepulsten Strahlung, insbesondere Laserstrahlung 312, des Schutzwandsystems und somit der Überwachung zumindest eines Teilvolumens des Zwischenraums zwischen den Wandungen 314, 316 ist eine Sender/ Empfängereinheit 328 vorgesehen, die mehrere Empfänger 322 umfasst, die auf einem sich in den Zwischenraum 320 erstreckenden Zylindermantel 330 angeordnet sind und von mehreren im Kreis angeordneten Sendern 332 konzentrisch umgeben sind. Die diesbezügliche Sender/ Empfängereinheit 328 ist als Sensor oder Detektiereinrichtung zu bezeichnen.

Die Detektiereinrichtung 328 ist mit einer Auswerteschaltung 324 verbunden, die z. B. an der Außenfläche der Außenwandung 316 angeordnet sein kann. Es besteht jedoch auch die Möglichkeit, die Auswerteschaltung 324 in dem Zwischenraum 320 anzuordnen, und zwar in einem Bereich zwischen den Wandungen 314, 316, der in einem Eckbereich einer von den Wandungen 314, 316 gebildeten Wand der Schutzeinrichtung bzw. der Einhausung verläuft. Entsprechend verläuft ein Anschluss zwischen der Detektiereinrichtung 320 und der Auswerteschaltung 324 innerhalb des Innenraums 320. Die Auswerteschaltung 324 ist in einem Gehäuse 336 angeordnet.

Die Sender 332 sind erwähntermaßen auf einem Kreis angeordnet und umgeben die Empfänger 322 konzentrisch, wobei jedem Empfänger 322 ein Sender 332 zugeordnet ist.

Die Empfänger 322 sind in einer Ebene angeordnet, die im Abstand parallel zu einer Ebene verlaufen, in der die Sender 332 vorgesehen sind. Des Weiteren weisen die Sender 332 eine Abstrahlcharakteristik 340 auf, die kegelförmig und im Wesentlichen senkrecht zu dem Wandelement 316 verlaufen. Die Empfänger 322 weisen eine Empfangscharakteristik 342 auf, die im Wesentlichen parallel zu der Begrenzungswandung 316 ausgerichtet ist. Die Sender 332 können Strahlung mit einem Modulationsmuster emittieren. Wird von den Empfängern 322 eine Strahlung detektiert, bei der das Modulationsmuster über einen vorgegebenen Wert gestört ist, so wird dies von der Auswerteschaltung 324 erkannt mit der Folge, dass die Strahlenquelle abgeschaltet wird.

Andere Detektiereinrichtungen können gleichfalls verwendet werden. Wesentlich ist, dass erkannt wird, ob in den Zwischenraum 320 zwischen den Wandungen 316, 318 gefahrbringenden Strahlung wie Laserstrahlung eindringt, um beim Detektieren dieser die Strahlenquelle abschalten zu können.

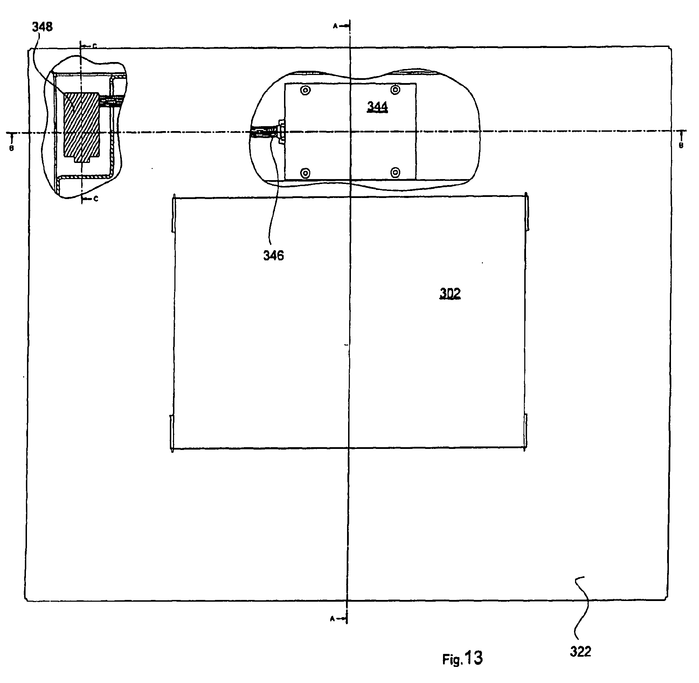

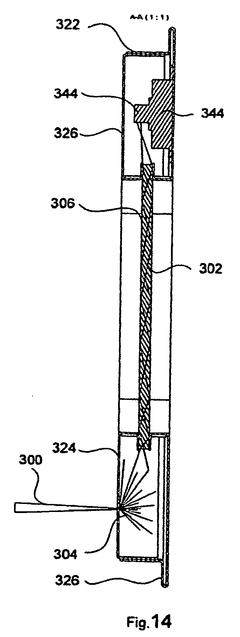

Den Fig. 13 bis 18 sind weitere bevorzugte Ausführungsformen von Schutzfenstern mit Rahmen zu entnehmen, die in Öffnungen einer Einhausung einsetzbar sind, die zwei zueinander beabstandete Wandungen aufweist, wobei der Zwischenraum zwischen diesen gegenüber eindringender Strahlung überwacht wird. Insoweit wird auf die zuvor erfolgten Erläuterungen verwiesen.

Die Ausführungsformen der Fig. 13 bis 16 sollen noch einmal verdeutlichen, dass prinzipiell ein Sensor 344 ausreicht, um sowohl eine aktive Scheibe 302 als auch den Hohlraum zwischen der Scheibe 302 und einem Rahmen 322 zu überwachen, unabhängig davon, in welchem Bereich Laserstrahlung 300 eindringt bzw. auftrifft.

Im Ausführungsbeispiel ist die Scheibe 302 zwischen nicht näher bezeichneten inneren Abkanten von Rahmenschenkeln 324, 326 des Rahmens 322 fixiert, wobei jeder Rahmenschenkel 324, 326 im Schnitt eine Rechteckgeometrie aufweist. Im Ausführungsbeispiel ist im oberen Querschenkel 322, der sich entlang der längeren Kante des aktiven Fenster 302 erstreckt, der Sensor 344 angeordnet, der von der Funktion und vom Aufbau her prinzipiell dem der Fig. 7 entspricht.

Im Ausführungsbeispiel durchdringt die Laserstrahlung 300 die Innenseite des unteren Querschenkels 324. Hierdurch entsteht Streustrahlung 304, die über das aktive Fenster, also die strahlenleitende Scheibe 302 zum Sensor 344 geleitet und dort detektiert wird. Die innerhalb der Scheibe 302 reflektierte Strahlung ist prinzipiell mit dem Bezugszeichen 306 gekennzeichnet.

Ein entsprechendes Schutzfenster wird mit einer Innen- oder Außenwandung 214 eines Schutzwandsystems zuvor beschriebener Art verbunden, und zwar über einen umlaufenden Falz 328, wie dieser prinzipiell dargestellt ist.

Wie sich aus den Fig. 13 und 15 ergibt, ist der Sensor 344 über Leitungen 346, die im Querschenkel 326 verlaufen, mit einem Anschluss 348 verbunden, über den eine Verbindung mit einer Auswerteschaltung erfolgt.

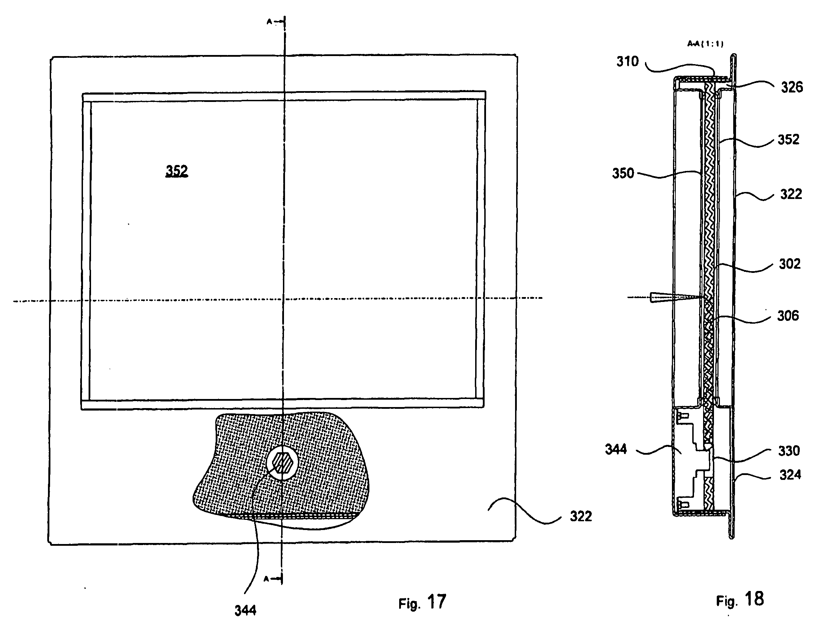

Eine alternative Ausführungsform, um Rahmen und Schutzscheibe mit einem einzigen Sensor zu überwachen, ist den Fig. 17 und 18 zu entnehmen, wobei für gleiche Elemente gleiche Bezugszeichen verwendet werden.

Abweichend vom Ausführungsbeispiel der Fig. 13 bis 16 erstreckt sich die Scheibe 302 über die gesamte von dem Rahmen 322 aufgespannte Innenfläche, so dass der umlaufende Rand 310 der Scheibe 302 an den Innenseiten der Schenkel 324, 326 des Rahmens 322 anliegt. In der Scheibe 302 befindet sich eine Öffnung 330, in der der Sensor 344 mit seinem Empfangsteil eingreift. Infolgedessen kann die durch die Scheibe 302 geleitete Strahlung 306 sicher erfasst werden, unabhängig davon, wo die Strahlung in den Rahmen 322 eindringt und somit auf die Scheibe 302 auftrifft.

Entsprechend den Ausführungsbeispielen der Fig. 2 bis 6 ist die Scheibe von einem lichtabsorbierenden oder reflektierenden strahlseitig verlaufendem zweiten Element 350 und einem strahlabgewandten dritten Element 352 außerhalb der Halterung, der Scheibe 302 abgedeckt, um im erforderlichen Umfang Strahlung zu absorbieren bzw. zu reflektieren, wie dies zuvor erläutert worden ist.

## Patentansprüche

1. Anordnung zum Detektieren einer Strahlung, insbesondere im IR-Bereich, vorzugsweise Laserstrahlung, die auf ein eine Öffnung (16, 18) einer Schutzeinrichtung wie Einhausung eines Schutzwandsystems verschließendes scheibenförmiges zumindest semitransparentes einen umlaufenden Rand aufweisendes erstes Element (20, 28, 104, 202, 302) trifft, wobei zumindest ein die Strahlung detektierender Sensor (227, 344) mit seinem Strahlenempfangsbereich (24) auf einen Umfangsrandabschnitt (26) des ersten Elements ausgerichtet ist, das strahlleitend ausgebildet ist, und gegebenenfalls entlang einer Außenseite des ersten Elements ein vorzugsweise strahlenabsorbierendes zweites Element (30, 102, 350) verläuft,
**dadurch gekennzeichnet,**
**dass** die Schutzeinrichtung zwei zueinander beabstandete Wandungen (12, 14, 316, 318) mit Öffnungen (16, 18) aufweist, die über das erste Element (20, 28, 104, 202, 302) verschlossen sind,
**dass** das erste Element (20, 28, 104, 202, 302) randseitig zwischen den Wandungen angeordnet ist, und
**dass** der Sensor (227, 334) mit seinem Empfangsbereich innerhalb einer Durchgangsaussparung (330) des ersten Elements angeordnet ist.

2. Anordnung nach Anspruch 1,
**dadurch gekennzeichnet,**
**dass** das zweite Element (30, 102, 350) strahlenabsorbierend oder strahlreflektierend ausgebildet ist und strahlauftreffseitig verläuft und als Schicht des ersten Elements (20, 28, 104, 302) ausgebildet oder mit dem ersten Element verbunden oder beabstandet zu dem ersten Element angeordnet ist.

3. Anordnung nach Anspruch 1 oder 2,
**dadurch gekennzeichnet,**
**dass** der Sensor (22, 110, 204, 210, 212, 214, 218, 224, 226, 227, 228, 230, 232, 242, 244, 344) aus mehreren auf einem Rohrmantel umfangsseitig angeordneten Empfängern (322) und mehreren auf einem Kreis und die Empfänger konzentrisch umgebenden Sendern besteht und dass über die Empfänger sowohl auf das erste Element (20, 28, 104, 202) auftreffende als auch außerhalb des ersten Elements in die Schutzeinrichtung eindringende Strahlung erfassbar ist.

4. Anordnung nach zumindest einem der vorhergehenden Ansprüchen,
**dadurch gekennzeichnet,**
**dass** das erste Element (20, 28, 104, 202, 302) aus Kunststoff mit in diesem vorhandenen Streuzentren für in das erste Element eindringende Strahlung besteht, wobei die Streuzentren insbesondere durch Nanopartikel gebildet sind.

5. Anordnung nach zumindest einem der vorhergehenden Ansprüchen,
**dadurch gekennzeichnet,**
**dass** das erste Element (20, 28, 104, 202, 302) auf seiner dem auftreffenden Strahl abgewandten Seite aus einem strahlenabsorbierenden oder strahlreflektierenden Material besteht oder dem ersten Element ein strahlenabsorbierendes oder strahlreflektierendes drittes Element (32, 106, 352) zugeordnet ist, das mit dem ersten Element verbunden oder zu diesem beabstandet ist.

6. Anordnung nach zumindest einem der vorhergehenden Ansprüchen,
**dadurch gekennzeichnet,**
**dass** das erste Element (20, 28, 104, 202) aus zwei Schichten oder flächig aufeinander liegenden Teilscheiben besteht, von denen eine Streuzentren bildende Nanopartikel enthält und die andere streuzentrenfrei oder im Wesentlichen streuzentrenfrei ist.

7. Anordnung nach zumindest einem der vorhergehenden Ansprüchen,
**dadurch gekennzeichnet,**
**dass** das erste Element (20, 28, 104) lichtdicht in der Schutzeinrichtung bzw. dem Rahmen eingebaut ist.

8. Anordnung nach zumindest einem der vorhergehenden Ansprüche,
**dadurch gekennzeichnet,**
**dass** die Scheibe (302) von einem Rahmen (322) aufgenommen ist, und dass die Scheibe mit ihrem umlaufenden Rand (310) an einer Innenfläche des Rahmens anliegt, die senkrecht zur von der Scheibe aufgespannten Ebene verläuft, und dass der Sensor (344) in mit seinem Empfangsteil unmittelbar in einer Aussparung (330) der Scheibe angeordnet ist.

9. Verfahren zum Detektieren einer insbesondere gefahrbringenden Strahlung, wie Laserstrahlung, die mittels einer Strahlenquelle (10) in einem Bereich erzeugt wird, der über ein Schutzwandsystem abgeschirmt ist, wobei eine Öffnung (16, 18) in dem Schutzwandsystem über eine zumindest semitransparente Scheibe (20, 28, 104, 202) verschlossen wird, und bei Auftreffen der gefahrbringenden Strahlung diese in Richtung zumindest eines im Umfangsrandbereich angeordneten und die gefahrbringende Strahlung detektierenden Sensors (22, 110, 204, 210, 212, 214, 218, 224, 226, 227, 228, 230, 232, 242, 244) über die Scheibe geleitet wird, über den beim Erfassen der gefahrbringenden Strahlung die Strahlenquelle abgeschaltet wird,
**dadurch gekennzeichnet,**
**dass** als Schutzwandsystem zwei zueinander beabstandete Wandungen (12, 14) mit Öffnungen (16, 18) verwendet wird, die durch die Scheibe (20, 28, 104) verschlossen wird, dass als Material für die Scheibe oder für ein strahlerzeugungsseitig der Scheibe zugeordnetes Element ein solches verwendet wird, dass bei Auftreffen der gefahrbringenden Strahlung diese streut, und
**dass** mittels des zumindest einen Sensors sowohl durch die Scheibe geleitete Strahlung als auch in das Schutzwandsystem außerhalb der Scheibe eindringende Strahlung überwacht wird.

10. Verfahren nach Anspruch 9,
**dadurch gekennzeichnet,**
**dass** sowohl das Schutzwandsystem als auch die Scheibe (202) über zumindest einen, vorzugsweise zumindest zwei Sensoren (22, 110, 204, 210, 212, 214, 218, 224, 226, 227, 228, 230, 232, 242, 244) überwacht wird, wobei der zumindest eine Sensor oder die zumindest zwei Sensoren vorzugsweise auf einer Verlängerung einer Diagonalen (212, 228) der Scheibe oder im Längsrandbereich bzw. in Längsrandbereichen der Scheibe angeordnet wird bzw. werden.

11. Verfahren nach Anspruch 9 oder 10,
**dadurch gekennzeichnet,**
**dass** als Scheibe ein solche verwendet wird, die eine erste Schicht mit Streuzentren bildenden Partikeln wie Nanopartikeln und eine im Wesentlichen streuzentrenfreie zweite Schicht aufweist, wobei über die erste Schicht auf die Scheibe auftreffende Strahlung und über die zweite Schicht in den Zwischenraum zwischen den Wandungen eindringende Strahlung von dem zumindest einen Sensor erfasst wird, oder dass als Scheibe eine solche verwendet wird, die ein erstes Scheibenelement und ein unter Bildung eines Luftspalts beabstandet zu diesem verlaufendes strahlabsorbierendes oder strahlreflektierendes zweites Scheibenelement aufweist, wobei über das erste Scheibenelement auf die Scheibe auftreffende Strahlung und über den Luftspalt in den Zwischenraum zwischen den Wandungen eindringende Strahlung von dem zumindest einen Sensor erfasst wird.

12. Verfahren nach zumindest Anspruch 11,
**dadurch gekennzeichnet,**
**dass** der Luftspalt durch ein Klebermaterial ausgefüllt wird, dessen Brechungsindex kleiner als der der Scheibe ist.

## Claims

1. An arrangement for the detection of radiation, particularly in the IR region, preferably laser radiation, that is incident upon a first element (20, 28, 104, 202, 302), which seals an opening (16, 18) of a protective device such as a shielding enclosure of a protective wall system, and which is embodied disc-shaped and at least semi-transparent with a circumferential edge, whereby at least one radiation detecting sensor (227, 344) with its radiation receiving area (24) is directed towards a circumferential edge section (26) of the first element, which is embodied to be radiation conducting, and whereby possibly a second, preferably radiation absorbing second element (30,102, 350) extends along the outside of the first element,
**characterized in that**
the protective device comprises two spaced-apart walls (12, 14, 316, 318) with openings (16, 18) that are sealed by the first element (20, 28, 104, 202, 302),
**in that** the first element (20, 28, 104, 202, 302) is arranged along its edge between the walls, and
**in that** the sensor (227, 344) with its receiving area is arranged within a through opening (227, 330) of the first element.

2. The arrangement according to claim 1,
**characterized in that**
the second element (30, 102, 350) is embodied to be radiation absorbing or radiation reflecting and extends on the side that radiation is incident upon and is embodied as a layer of the first element (20, 28, 104, 302) or is connected to the first element or is arranged spaced apart from the first element.

3. The arrangement according to claim 1 or 2,
**characterized in that**
the sensor (22, 110, 204, 210, 212, 214, 218, 224, 226, 227, 228, 230, 232, 242, 244, 344) consists of several receivers (322) arranged on the circumference of a tubular jacket and several transmitters, which are arranged on a circle and surround the receivers concentrically, and **in that** both radiation incident upon the first element (20, 28, 104, 202) as well as radiation penetrating into the protective device outside of the first element can be detected by the receivers.

4. The arrangement according to at least one of the preceding claims,
**characterized in that**
the first element (20, 28, 104, 202, 302) consists of plastic that contains scattering points for radiation penetrating into the first element, whereby the scattering points are particularly formed by nano-particles.

5. The arrangement according to at least one of the preceding claims,
**characterized in that**
the first element (20, 28, 104, 202, 302) on its side that faces away from the incident beam consists of a radiation absorbing or radiation reflecting material or that associated with the first element is a radiation absorbing or radiation reflecting third element (32, 106, 352) that is connected to or spaced apart from the first element.

6. The arrangement according to at least one of the preceding claims,
**characterized in that**
the first element (20, 28, 104, 202) consists of two layers or two partial panes resting upon each other along a two-dimensional contact area, one of which contains nano-particles forming scattering points while the other one is entirely or substantially free of scattering points.

7. The arrangement according to at least one of the preceding claims,
**characterized in that**
the first element (20, 28, 104) is installed in the protective device or in the frame in a light-tight manner.

8. The arrangement according to at least one of the preceding claims,
**characterized in that**
the pane (302) is accommodated in a frame (322), and that the pane along its circumferential edge (310) is in contact with an inner surface of the frame, whereby the inner surface extends perpendicular to the plane defined by the pane, and **in that** the sensor (344) with its receiving element is arranged directly in a recess (330) of the pane.

9. A method for the detection of, in particular, hazardous radiation, such as laser radiation, that is generated by means of a radiation source (10) in an area that is shielded by a protective wall system, whereby an opening (16, 18) in the protective wall system is sealed by at least one semi-transparent pane (20, 28, 104, 202), and upon incidence of hazardous radiation this is conducted across the pane in the direction of at least one sensor (22, 110, 204, 210, 212, 214, 218, 224, 226, 227, 228, 230, 232, 242, 244), which is arranged in a circumferential edge region, said sensor is adapted to detect the hazardous radiation, and, upon detection of hazardous radiation, switches off the radiation source,
**characterized in that**
as protective wall system are employed two spaced-apart walls (12, 14) with openings (16, 18), that are sealed by the pane (20, 28, 104), **in that** as material for the pane or for an element associated with the pane on the radiationgeneration side is employed an element that, upon incidence of the hazardous radiation, scatters the latter, and
**in that** the at least one sensor monitors both radiation conducted through the pane as well as radiation penetrating into the protective wall system outside of the pane.

10. The method according to claim 9,
**characterized in that**
both the protective wall system and the pane (202) are monitored by at least one, preferably by at least two sensor(s) (22, 110, 204, 210, 212, 214, 218, 224, 226, 227, 228, 230, 232, 242, 244), whereby the at least one sensor or the at least two sensors preferably is (are) arranged on the extension of a diagonal (212, 228) of the pane or in the longitudinal edge region(s) of the pane.

11. The method according to claim 9 or 10,
**characterized in that**
the pane employed is a pane that comprises a first layer with particles, such as nano-particles, forming scattering points and a second layer that is fundamentally free of scattering points, whereby radiation reaching the pane via the first layer and radiation penetrating into the interstice between the walls via the second layer is detected by the at least one sensor, or **in that** as a pane is employed, a pane that comprises a first pane element and a radiation absorbing or radiation reflecting second pane element, which extends spaced apart to the first element forming an air gap, whereby radiation incident upon the pane via the first pane element and radiation penetrating into the interstice between the walls via the air gap is detected by the at least one sensor.

12. The method according to at least claim 11,
**characterized in that**
the air gap is filled using an adhesive material with a refractive index that is lower than that of the pane.

## Revendications

1. Dispositif de détection d'un rayonnement, en particulier dans le domaine IR, de préférence d'un rayonnement laser, qui est incident sur un premier élément (20, 28, 104, 202, 302) en forme de plaque, au moins semi-transparent, présentant un bord périphérique et fermant une ouverture (16, 18) d'un dispositif protecteur tel qu'une enceinte d'un système d'écrans protecteurs, sachant qu'au moins un capteur (227, 334) détectant le rayonnement est orienté avec sa zone réceptrice de rayonnement (24) sur une section de bord périphérique (26) du premier élément qui est conçu pour guider le rayonnement, et que le cas échéant, un deuxième élément (30, 102, 350) de préférence absorbant le rayonnement s'étend le long d'une face extérieure du premier élément,
**caractérisé en ce**
**que** le dispositif protecteur présente deux parois (12, 14, 316, 318) distantes l'une de l'autre et munies d'ouvertures (16, 18) qui sont fermées par le premier élément (20, 28, 104, 202, 302),
**que** le premier élément (20, 28, 104, 202, 302) est disposé au niveau de ses bords entre les parois, et
**que** le capteur (227, 334) est disposé avec sa zone réceptrice dans un évidement traversant (330) du premier élément.

2. Dispositif selon la revendication 1,
**caractérisé en ce**
**que** le deuxième élément (30, 102, 350) est conçu de manière à absorber ou à réfléchir le rayonnement, s'étend du côté irradié et est formé en tant que couche du premier élément (20, 28, 104, 302), ou est relié au premier élément ou est placé à distance du premier élément.

3. Dispositif selon la revendication 1 ou 2,
**caractérisé en ce**
**que** le capteur (22, 110, 204, 210, 212, 214, 218, 224, 226, 227, 228, 230, 232, 242, 244, 344) est constitué de plusieurs récepteurs (322) disposés côté périphérie sur une enveloppe tubulaire et de plusieurs émetteurs disposés sur un cercle et entourant concentriquement les récepteurs, et que par les récepteurs est détectable le rayonnement incident sur le premier élément (20, 28, 104, 202) ainsi que le rayonnement pénétrant dans le dispositif protecteur hors du premier élément.

4. Dispositif selon au moins une des revendications précédentes,
**caractérisé en ce**
**que** le premier élément (20, 28, 104, 202, 302) est constitué de matière synthétique avec des centres de diffusion présents dans ladite matière pour diffuser le rayonnement pénétrant dans le premier élément, lesdits centres de diffusion étant en particulier formés par des nanoparticules.

5. Dispositif selon au moins une des revendications précédentes,
**caractérisé en ce**
**que** sur sa face opposée au rayonnement incident, le premier élément (20, 28, 104, 202, 302) est constitué d'un matériau absorbant ou réfléchissant le rayonnement ou qu'au premier élément est associé un troisième élément (32, 106, 352) absorbant ou réfléchissant le rayonnement, ledit troisième élément étant relié au premier élément ou distant de ce dernier.

6. Dispositif selon au moins une des revendications précédentes,
**caractérisé en ce**
**que** le premier élément (20, 28, 104, 202) est constitué de deux couches ou plaques partielles superposées face contre face, dont l'une contient des nanoparticules formant des centres de diffusion et dont l'autre est exempte de centres de diffusion ou pour l'essentiel exempte de centres de diffusion.

7. Dispositif selon au moins une des revendications précédentes,
**caractérisé en ce**
**que** le premier élément (20, 28, 104) est monté dans le dispositif protecteur ou le cadre de manière étanche à la lumière.

8. Dispositif selon au moins une des revendications précédentes,
**caractérisé en ce**
**que** la plaque (302) est logée dans un cadre (322), et que la plaque s'appuie avec son bord périphérique (310) sur une surface intérieure du cadre, laquelle s'étend perpendiculairement au plan défini par la plaque, et que le capteur (344) avec sa zone réceptrice est disposé directement dans un évidement (330) de ladite plaque.

9. Procédé de détection d'un rayonnement en particulier dangereux, tel qu'un rayonnement laser, qui est émis par une source de rayonnement (10) dans une zone protégée par un système d'écrans protecteurs, sachant qu'une ouverture (16, 18) dans le système d'écrans protecteurs est fermée par une plaque (20, 28, 104, 202) au moins semi-transparente, et qu'en cas d'incidence du rayonnement dangereux, ledit rayonnement est guidé par la plaque en direction d'au moins un capteur (22, 110, 204, 210, 212, 214, 218, 224, 226, 227, 228, 230, 232, 242, 244) disposé dans la zone périphérique et détectant le rayonnement dangereux, et par l'intermédiaire duquel la source de rayonnement est désactivée en cas de détection du rayonnement dangereux,
**caractérisé en ce**
**qu'**en tant que système d'écrans protecteurs sont utilisées deux parois (12, 14) distantes l'une de l'autre et munies d'ouvertures (16, 18) qui sont fermées par la plaque (20, 28, 104), que pour la plaque ou pour un élément associé à la plaque du côté de l'émission du rayonnement est utilisé un matériau qui diffuse le rayonnement dangereux en cas d'incidence de ce dernier, et
**qu'**au moyen de l'au moins un capteur sont surveillés le rayonnement guidé à travers la plaque ainsi que le rayonnement pénétrant dans le système d'écrans protecteurs à l'extérieur de la plaque.

10. Procédé selon la revendication 9,
**caractérisé en ce**
**que** le système d'écrans protecteurs ainsi que la plaque (202) sont surveillés par au moins un, de préférence au moins deux capteurs (22, 110, 204, 210, 212, 214, 218, 224, 226, 227, 228, 230, 232, 242, 244), l'au moins un capteur ou les au moins deux capteurs étant disposé(s) de préférence sur le prolongement d'une diagonale (212, 228) de la plaque ou dans la zone du bord longitudinal ou dans les zones des bords longitudinaux de la plaque.

11. Procédé selon la revendication 9 ou 10,
**caractérisé en ce**
**qu'**est utilisée une plaque qui présente une première couche avec des particules, telles que des nanoparticules, formant des centres de diffusion, et une deuxième couche pour l'essentiel exempte de centres de diffusion, sachant que le rayonnement incident sur la plaque en passant par la première couche et le rayonnement pénétrant dans l'espace intermédiaire entre les parois en passant par la deuxième couche sont détectés par l'au moins un capteur, ou qu'est utilisée une plaque qui présente un premier élément de plaque et, en formant un interstice, un deuxième élément de plaque distant dudit premier élément et absorbant ou réfléchissant le rayonnement, sachant que le rayonnement incident sur la plaque en passant par le premier élément de plaque et le rayonnement pénétrant dans l'espace intermédiaire entre les parois en passant par l'interstice sont détectés par l'au moins un capteur.

12. Procédé selon au moins la revendication 11,
**caractérisé en ce**
**que** l'interstice est rempli d'un matériau adhésif dont l'indice de réfraction est inférieur à celui de la plaque.
